# EUROPÄISCHE PATENTSCHRIFT

(11) **EP 2 006 149 B1**
(45) Veröffentlichungstag und Bekanntmachung des Hinweises auf die Patenterteilung: **13.10.2010**
(21) Anmeldenummer: 08004893.7
(22) Anmeldetag: 15.03.2008
(51) Int. Cl.: B60N 2/22

(54) **Fahrzeugsitz, insbesondere Kraftfahrzeugsitz**
Vehicle seat, in particular motor vehicles seat
Siège de véhicule, en particulier siège de véhicule automobile

(30) Priorität: 05.06.2007 DE 102007026600
(43) Veröffentlichungstag der Anmeldung: 24.12.2008
(73) Patentinhaber: Recaro GmbH & Co. KG, 73230 Kirchheim/Teck (DE)
(72) Erfinder: Teufel, Ingo, 67806 Rockenhausen (DE); Edrich, Hans, 67716 Heltersberg (DE); Schumann, Kai, 66509 Rieschweiler-Mühlbach (DE)
(74) Vertreter: Patentanwälte Hosenthien-Held und Dr. Held

(56) Entgegenhaltungen:
- EP-A- 1 010 572
- EP-A- 1 176 048
- DE-A1- 1 780 520
- DE-C1- 10 135 857
- DE-C1- 19 754 962
- FR-A- 2 508 298
- JP-A- 59 130 746

## Beschreibung

Die Erfindung betrifft einen Fahrzeugsitz, insbesondere einen Kraftfahrzeugsitz, mit den Merkmalen des Oberbegriffs des Anspruches 1.

Bei einem aus der EP 1 176 048 B1 bekannten Fahrzeugsitz ist der Neigungseinsteller zwischen einem feststehenden Teil eines dem Sitzunterbau zugeordneten Sitzrahmens und einem relativ dazu schwenkbaren, vorderen Teil des Sitzrahmens vorgesehen. Die Sitzschale ist vorne an dem schwenkbaren Teil angelenkt und liegt im Bereich des Hüftpunkts mittels eines Schub-Dreh-Lagers auf dem feststehenden Teil des Sitzrahmens auf. Die Bewegung des schwenkbaren Teils des Sitzrahmens hebt vorne die Sitzschale an oder senkt sie ab, so dass sich insgesamt die Neigung der Sitzschale ändert. Von Nachteil ist, dass ein derartiger Sitzrahmen nur für neigungseinstellbare Fahrzeugsitze verwendbar ist. Eine Fahrzeugsitzvariante ohne Sitzschalenneigungseinstellung bedingt dann deutliche Änderungen der Sitzstruktur.

In der DE 1 780 520 A1 ist ein Fahrzeugsitz der eingangs genannten Art beschrieben, bei dem eine in Sitzquerrichtung ausgerichtete Welle drehbar in Lagerböcken des Sitzunterbaus gelagert ist. An der Welle sind ein Antriebshebel und ein Nocken befestigt. Das Sitzkissen liegt lose auf dem Nocken auf. Mittels eines Spindelantriebes wird der Antriebshebel geschwenkt, worauf der Nocken das Sitzkissen anhebt oder absenkt, was dessen Neigung relativ zum Sitzunterbau einstellt.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Indem der Neigungseinsteller lose am Sitzunterbau oder am Sitzkissen angesetzt ist und an der jeweils anderen Baugruppe beweglich angebracht ist, kann ohne oder ohne wesentliche Änderungen der Konstruktion des Sitzunterbaus und/oder des Sitzkissens, genauer gesagt dessen Trägers (beispielsweise Sitzschale), der Neigungseinsteller zwischen diese Baugruppen eingesetzt werden. Damit besteht so- .. wohl eine baukastenmäßige Erstausstattung des Fahrzeugsitzes mit oder ohne Neigungseinstellung des Sitzkissens als auch eine Nachrüstmöglichkeit für Sitzunterbauten ohne Neigungseinstellung des Sitzkissens. Unter dem Begriff "lose" soll eine Lagerung verstanden werden, bei der anstelle der üblichen Einschränkung eines Freiheitsgrades, beispielsweise bei Drehlagern des radialen Freiheitsgrades, dieser Freiheitsgrad nur teilweise eingeschränkt ist, beispielsweise nur in eine seiner beiden möglichen Richtungen eingeschränkt ist, hingegen entgegengesetzt dazu frei ist. Typische Beispiele wären ein an sich ungesicherter Formschluss oder halboffene Lagerschalen von Drehlagern ohne spezielle Sicherungen der Lagerung an sich. Die Sicherung der losen Lagerung erfolgt vorzugsweise "geometrisch", beispielsweise indem erst ab bestimmten Winkelstellungen zwischen den lose gelagerten Bauteilen diese sich voneinander entfernen können, diese Winkelstellungen aber im Gebrauch nicht erreicht werden. Dies soll nicht ausschließen, dass im Abstand zur Lagerstelle doch eine spezielle Sicherung für die lose Lagerung vorgesehen ist.

Die als zentrales, multifunktionales Antriebs- und Abstützbauteil des Neigungseinstellers vorgesehene Welle ist vom Antrieb antreibbar. Die Welle ist - vorzugsweise lose - am Sitzkissen gelagert und sitzt mittels wenigstens einer Gabel lose auf dem Sitzunterbau auf. Die Gabel ist fest an der Welle angebracht und sitzt lose auf einem parallel zur Welle ausgerichteten Querrohr des Sitzunterbaus, wobei die Gabel um das Querrohr schwenkbar ist.

Verschiedene vorteilhafte Detailausgestaltungen, beispielsweise der modulare Aufbau, einfache und - insbesondere an der Sitzschale - vormontierbare Bauteile, Gleichteil in linken und rechten Fahrzeugsitzen, eine Welle als zentrales, multifunktionales Antriebs- und Abstützbauteil des Neigungseinstellers, ein Schub-Dreh-Lager als Geometrieausgleich und Abhebesicherung, ein Drehlager des Sitzkissens, insbesondere im Bereich des H-Punktes (Hüftpunktes), und die schwenkbare Lagerung des Antriebs des Neigungseinstellers, vorzugsweise eine Spindel-Spindelmutter-Systems, können einzeln oder in Kombination verwirklicht sein. Als Antrieb des Neigungseinstellers kann ein Motor oder eine manuelle Einheit vorgesehen sein, beispielsweise eine Schrittschaltmechanik. Der Antrieb kann linear oder rotatorisch sein. Unter der Bezeichnung "Motor" sollen vorliegend auch an sich bekannte Motor-Getriebe-Einheiten verstanden werden.

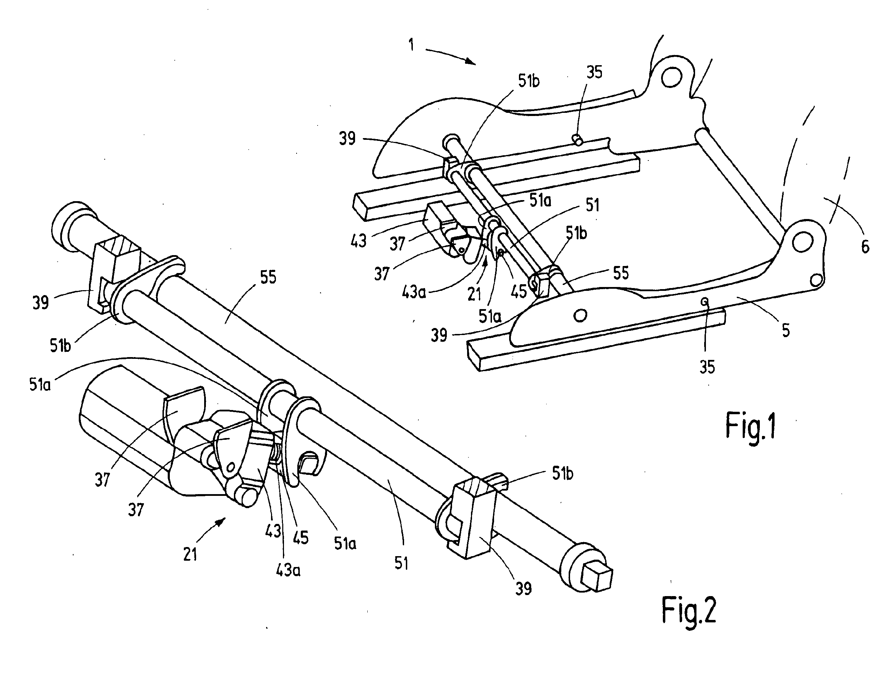

Im folgenden ist die Erfindung anhand eines in der Zeichnung dargestellten Ausführungsbeispiels näher erläutert. Es zeigen
- Fig. 1: eine perspektivische, teilweise schematisierte Ansicht des Ausführungsbei- spiels ohne Sitzkissen und mit angedeuteter Lehne,
- Fig. 2: eine perspektivische Ansicht des Neigungseinstellers,

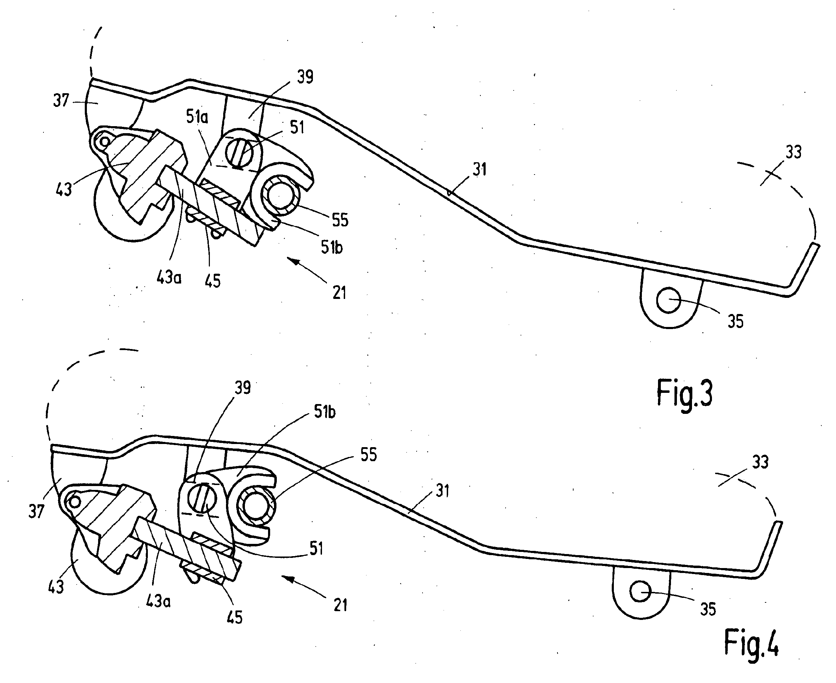

- Fig. 3.: einen Längsschnitt durch einen Teil des Ausführungsbeispiels mit maximal geneigtem Sitzkissen, und
- Fig. 4: einen Fig. 3 entsprechenden Längsschnitt mit minimal geneigtem Sitzkissen.

Ein Fahrzeugsitz 1 ist vorliegend als Vordersitz eines Kraftfahrzeuges vorgesehen, wobei die Anordnung des Fahrzeugsitzes 1 innerhalb des Kraftfahrzeuges und dessen gewöhnliche Fahrtrichtung einige der nachfolgend verwendeten Richtungsangaben definieren, insbesondere die Sitzquerrichtung, welche senkrecht zur Fahrtrichtung und horizontal verläuft. Der Fahrzeugsitz 1 weist als tragende Struktur seines Sitzteils einen Sitzunterbau 5, dessen Einzelheiten vorliegend nicht interessieren und an dem die Lehne 6 schwenkbar angebracht ist, einen Neigungseinsteller 21 und eine Sitzschale 31 auf, welche das Sitzpolster 33 trägt. Sitzschale 31 und Sitzpolster 33 definieren zusammen das Sitzkissen. Die Neigung des Sitzschale 31 und damit des Sitzkissens ist mittels des Neigungseinstellers 21 einstellbar.

Die Sitzschale 31 ist im Bereich ihres hinteren Ende, vorzugsweise unterhalb des H-Punktes des Insassens, mittels zweier Kissenlager 35, welche miteinander fluchten und eine in Sitzquerrichtung verlaufende Schwenkachse definieren, am Unterbau 5 angelenkt. Im Bereich ihres vorderen Endes ist die Sitzschale 31 mittels zweier Antriebslager 37 und zweier Wellenlager 39 auf dem Neigungseinsteller 21 gelagert. Der Neigungseinsteller 21 umfasst einen Antrieb 43, vorliegend einem Hubspindelmotor, dessen Abtriebswelle als Spindel 43a ausgebildet ist, und der um eine in Sitzquerrichtung verlaufende Achse schwenkbar an den Antriebslagern 37 gelagert ist. Der Neigungseinsteller 21 umfasst des weiteren eine Spindelmutter 45, welche auf die Spindel 43a geschraubt ist und welche seitlich an, genauer gesagt in, je einem Antriebshebel 51a um eine in Sitzquerrichtung verlaufende Achse drehbar gelagert ist.

Der Neigungseinsteller 21 umfasst ferner eine Welle 51, welche in Sitzquerrichtung ausgerichtet ist und welche endseitig in den Wellenlagern 39 gelagert ist. Die Wellenlager 39 dienen als Schub-Dreh-Lager, d.h. die Welle 51 ist in den Wellenlagern 39 drehbar und in einer durch die Wellenlager 39 vorgegebenen Richtung senkrecht zur Sitzquerrichtung verschiebbar. Die Welle 51 ist also lose an der Sitzschale 31 gelagert. An der Welle 51 sind mittig die beiden Antriebshebel 51a fest angebracht, vorliegend angeschweißt. Ebenso ist an der Welle 51 im Bereich der beiden Wellenlager 39 je eine Gabel 51b fest angebracht, vorliegend angeschweißt. Die Gabeln 51b sitzen lose auf einem Querrohr 55, welches ein Bestandteil des Sitzunterbaus 5 ist und in Sitzquerrichtung verläuft, wobei die Gabeln 51b um das Querrohr 55 ein Schwenklager. Die Antriebshebel 51a und die Gabeln 51b stehen in Umfangsrichtung der Welle 51 betrachtet um etwas weniger als 90° versetzt zueinander von der Welle 51 ab.

Die Kinematik des Neigungseinstellers 21 spielt sich im wesentlichen in der senkrecht zur Sitzquerrichtung verlaufenden Ebene ab. Die Spindel 51a liegt in dieser Ebene. Mit einer Drehung derselben verschiebt sich die Spindelmutter 45 relativ zum Antrieb 43. Die Verschiebung der Spindelmutter 45 erfolgt mit einer Komponente tangential zur Welle 51 und bewirkt daher eine Drehung der Welle 51 um ihre eigene Achse. Aufgrund der losen Lagerung der Welle 51 in den Wellenlagern 39 führt dies zu einer Bewegung der Gabeln 51b um das Querrohr 55, welche die Welle 51 samt Wellenlager 39 im wesentlichen in vertikaler Richtung bewegt und dadurch die Sitzschale 31 an dieser Stelle anhebt oder absenkt. Aufgrund der Anlenkung der Sitzschale 31 mittels der vom Wellenlager 39 beabstandeten Kissenlager 35 am Sitzunterbau 5 führt diese im wesentlichen vertikale Bewegung der Wellenlager 39 zu einer Neigungsänderung der Sitzschale 31 und damit des Sitzkissens relativ zum Sitzunterbau 5. Ergänzend sei erwähnt, dass innerhalb des Neigungseinstellers 21 ein geometrischer Ausgleich der Antriebsbewegung durch die drehbare Lagerung des Antriebs 43 im Antriebslager 37 und diejenige der Spindelmutter 45 im Antriebshebel 51a sowie die Schub-Lagerung der Welle 51 im Wellenlager 39 erfolgt.

Der Neigungseinsteller 21 ist ein Aufsatz oder eine Zwischenbaugruppe, welche beweglich am Sitzkissen angebracht, vorliegend mittels eines Schubgelenks und eines Drehgelenks angelenkt, und lose auf den Sitzunterbau 5 aufgesetzt oder an diesem angesetzt ist, ohne dass die zugehörige Schnittstelle nennenswert zu ändern ist. Der Neigungseinsteller 21 kann daher Bestandteil eines modularen Systems sein, in welchem er eine starre Anbringung der Sitzschale 31 am Querrohr 55 (ungefähr im Bereich des Wellenlagers 39) bedarfsweise ersetzt. In abgewandelter Ausführung ist der Neigungseinsteller 21 beweglich am Sitzunterbau 5 angebracht, und die Sitzschale 31 (und damit das Sitzkissen) ist - vorzugsweise vorne - lose am Neigungseinsteller 21 angesetzt oder auf diesem aufgesetzt und - vorzugsweise hinten im Bereich des Hüftpunktes - am Sitzunterbau 5 beweglich angebracht, beispielsweise eingehängt oder angelenkt. Diese im hinteren Bereiche vorgesehene bewegliche Anbringung der Sitzschale 31 am Sitzunterbau 5 sichert die im vorderen Bereich vorgesehene lose Lagerstelle des Neigungseinstellers 21.

### Bezugszeichenliste

- 1: Fahrzeugsitz
- 5: Sitzunterbau
- 6: Lehne
- 21: Neigungseinsteller
- 31: Sitzschale
- 33: Sitzkissen
- 35: Kissenlager
- 37: Antriebslager
- 39: Wellenlager, Schub-Dreh-Lager
- 43: Antrieb
- 43a: Spindel
- 45: Spindelmutter
- 51: Welle
- 51a: Antriebshebel
- 51b: Gabel
- 55: Querrohr

## Patentansprüche

1. Fahrzeugsitz, insbesondere Kraftfahrzeugsitz, mit einem Sitzunterbau (5), einem insbesondere eine Sitzschale (31) aufweisenden Sitzkissen (31, 33) und einem einen Antrieb (43) aufweisenden Neigungseinsteller (21), mittels dessen die Neigung des Sitzkissens (31, 33) relativ zum Sitzunterbau (5) einstellbar ist, wobei der Neigungseinsteller (21) lose am Sitzunterbau (5) oder am Sitzkissen (31, 33) angesetzt ist und an der jeweils anderen Baugruppe beweglich angebracht ist, und wobei der Neigungseinsteller (21) eine in Sitzquerrichtung ausgerichtete Welle (51) aufweist, **dadurch gekennzeichnet, dass** die Welle (51) mittels wenigstens einer Gabel (51 b), welche fest an der Welle (51) angebracht ist, lose auf einem in Sitzquerrichtung ausgerichteten Querrohr (55) des Sitzunterbaus (5) sitzt, wobei die Gabel (51b) um das Querrohr (55) schwenkbar ist.

2. Fahrzeugsitz nach Anspruch 1, **dadurch gekennzeichnet, dass** das Sitzkissen (31, 33), insbesondere im Bereich des Hüftpunktes des Insassens, beweglich am Sitzunterbau (5) angebracht ist, insbesondere eingehängt oder angelenkt ist.

3. Fahrzeugsitz nach einem der vorhergehenden Ansprüche, **dadurch gekennzeichnet, dass** der Neigungseinsteller (21) mittels eines Schub-Dreh-Lagers (39) am Sitzkissen (31, 33), insbesondere der Sitzschale (31), beweglich angebracht ist.

4. Fahrzeugsitz nach Anspruch 3, **dadurch gekennzeichnet, dass** die Welle (51) endseitig im Schub-Dreh-Lager (39) gelagert ist.

5. Fahrzeugsitz nach einem der vorhergehenden Ansprüche, **dadurch gekennzeichnet, dass** die Welle (51) mittels wenigstens eines Antriebshebels (51 a), welcher fest an der Welle (51) angebracht ist, drehbar ist.

6. Fahrzeugsitz nach einem der vorhergehenden Ansprüche, **dadurch gekennzeichnet, dass** der Antrieb (43) des Neigungseinstellers (21) eine Spindel (43a) als Abtriebswelle und eine auf der Spindel (43a) sitzende Spindelmutter (45) aufweist.

7. Fahrzeugsitz nach Anspruch 5 und 6, **dadurch gekennzeichnet, dass** die Spindelmutter (45) drehbar am Antriebshebel (51 a) gelagert ist.

8. Fahrzeugsitz nach Anspruch 6 oder 7, **dadurch gekennzeichnet, dass** der Antrieb (43) mittels wenigstens eines Antriebslagers (37) am Sitzkissen (31, 33), insbesondere der Sitzschale (31), schwenkbar gelagert ist.

## Claims

1. Vehicle seat, in particular motor vehicle seat, comprising a seat substructure (5), a seat cushion (31, 33) comprising in particular a seat shell (31) and an inclination adjuster (21) comprising a drive (43), by means of which the inclination of the seat cushion (31, 33) may be adjusted relative to the seat substructure (5), **characterized in that** the inclination adjuster (21) is loosely positioned on the seat substructure (5) or on the seat cushion (31, 33) and is movably attached to the other respective sub-assembly, wherein the inclination adjuster (21) comprises a shaft (51) aligned in the transverse direction of the seat, **characterized in that** the shaft (51), by means of at least one fork (51b) which is fixedly attached to the shaft (51), is loosely positioned on a transverse tube (55) of the seat substructure (5) aligned in the transverse direction of the seat, the forks (51b) being pivotable about the transverse tube (55).

2. Vehicle seat according to Claim 1, **characterized in that** the seat cushion (31, 33), in particular in the region of the hip point of the passenger, is movably attached to the seat substructure (5), in particular suspended or articulated.

3. Vehicle seat according to one of the preceding claims, **characterized in that** the inclination adjuster (21) is movably attached by means of a rotary thrust bearing (39) to the seat cushion (31, 33), in particular the seat shell (31).

4. Vehicle seat according to Claim 3, **characterized in that** the shaft (51) is mounted at the ends in the rotary thrust bearing (39).

5. Vehicle seat according to one of the preceding claims, **characterized in that** the shaft (51) is rotatable by means of at least one drive lever (51a) which is preferably fixedly attached to the shaft (51).

6. Vehicle seat according to one of the preceding claims, **characterized in that** the drive (43) of the inclination adjuster (21) has a spindle (43a) as an output shaft and a spindle nut (45) located on the spindle (43a).

7. Vehicle seat according to Claim 5 and 6, **characterized in that** the spindle nut (45) is rotatably mounted on the drive lever (51a).

8. Vehicle seat according to Claim 6 or 7, **characterized in that** the drive (43) is pivotably mounted by means of at least one drive bearing (37) on the seat cushion (31, 33), in particular the seat shell (31).

## Revendications

1. Siège de véhicule, en particulier siège de véhicule automobile, avec un châssis de siège (5), avec un coussin de siège (31, 33) comprenant en particulier une coque de siège (31) et avec un dispositif (21) de réglage de l'inclinaison comprenant un mécanisme d'entraînement (43), grâce auquel l'inclinaison du coussin de siège (31, 33) peut être réglée par rapport au châssis de siège (5), dans lequel le dispositif (21) de réglage de l'inclinaison repose librement sur le châssis de siège (5) ou sur le coussin de siège (31, 33) et est monté mobile sur l'autre élément considéré et dans lequel le dispositif (21) de réglage de l'inclinaison possède un axe (51) orienté dans la direction transversale du siège, **caractérisé par le fait que** l'axe (51) repose librement par au moins une fourchette (51b) solidaire de l'axe (51) sur une traverse tubulaire (55) du châssis de siège (5), orientée dans la direction transversale du siège, la fourchette (51b) étant apte à pivoter autour de la traverse tubulaire (55).

2. Siège de véhicule selon la revendication 1, **caractérisé par le fait que** le coussin de siège (31, 33), en particulier dans la région du point d'articulation de la hanche de l'occupant, est monté mobile, en particulier suspendu ou articulé, sur le châssis de siège (5).

3. Siège de véhicule selon l'une des revendications précédentes, **caractérisé par le fait que** le dispositif (21) de réglage de l'inclinaison est monté mobile à l'aide d'un palier de cisaillement et de rotation (39) sur le coussin de siège (31, 33), en particulier sur la coque de siège (31).

4. Siège de véhicule selon la revendication 3, **caractérisé par le fait que** l'axe (51) est monté par son extrémité sur le palier de cisaillement et de rotation (39).

5. Siège de véhicule selon l'une des revendications précédentes, **caractérisé par le fait que** l'axe (51) est apte à tourner au moyen d'au moins un levier d'entraînement (51a) qui est monté fixe sur l'axe (51).

6. Siège de véhicule selon l'une des revendications précédentes, **caractérisé par le fait que** le mécanisme d'entraînement (43) du dispositif (21) de réglage de l'inclinaison possède une broche (43a) servant d'arbre de sortie et un écrou de broche (45) monté sur la broche (43a).

7. Siège de véhicule selon les revendications 5 et 6, **caractérisé par le fait que** l'écrou de broche (45) est monté tournant sur le levier d'entraînement (51a).

8. Siège de véhicule selon la revendication 6 ou 7, **caractérisé par le fait que** le mécanisme d'entraînement (43) est monté pivotant sur le coussin de siège (31, 33), en particulier la coque de siège (31), à l'aide d'au moins un palier d'entraînement (37).
